# FASCICULE DE BREVET EUROPEEN

(11) **EP 3 836 590 B1**
(45) Date de publication et mention de la délivrance du brevet: **04.06.2025**
(21) Numéro de dépôt: 20212648.8
(22) Date de dépôt: 09.12.2020
(51) Int. Cl.: H04W 12/086, H04W 12/122, H04W 12/71, H04W 12/73, H04W 24/02, H04W 84/12

(54) **PROCEDE DE SECURISATION DES ACCES A UN RESEAU, SYSTEME ET DISPOSITIF ASSOCIE**
VERFAHREN ZUM GESICHERTEN ZUGANG ZU EINEM NETZWERK, DAMIT VERBUNDENES SYSTEM UND VORRICHTUNG
METHOD OF RENDERING ACCESS TO A NETWORK SECURE, ASSOCIATED SYSTEM AND DEVICE

(30) Priorité: 13.12.2019 FR 1914386
(43) Date de publication de la demande: 16.06.2021
(73) Titulaire: Sagemcom Broadband SAS, 92270 Bois-Colombes (FR)
(72) Inventeur: VANKIEKEN, Nicolas, 92500 RUEIL MALMAISON (FR)
(74) Mandataire: Cabinet Le Guen Maillet

(56) Documents cités:
- WO-A1-2019/084340
- WO-A1-2020/102294
- US-A1- 2004 198 319
- US-A1- 2017 134 416
- US-A1- 2020 153 846

## Description

### DOMAINE TECHNIQUE

La présente invention concerne le domaine de la sécurisation des réseaux informatiques et de communication. L'invention concerne plus particulièrement l'isolation d'un dispositif connecté via une liaison sans fil à un réseau de communication et détecté comme réalisant une ou des opérations contraires à des règles de sécurité appliquées dans ce réseau.

### ETAT DE LA TECHNIQUE ANTERIEURE

Le développement croissant de l'internet des objets est tel que beaucoup d'objets connectés à un réseau local, qui doivent de surcroît être souvent faciles à connecter et à configurer par un utilisateur non averti, ne satisfont pas ou peu à des exigences de sécurité informatique et peuvent être détournés pour la réalisation d'attaques ou d'intrusions sur un réseau informatique ou un réseau de communication.

Une attaque largement répandue est le déni de service distribué. Il s'agit d'une attaque par laquelle de nombreux systèmes connectés à un même réseau sont compromis et utilisés en réunion pour attaquer une même cible, afin de submerger les ressources nécessaires au bon fonctionnement de cette cible et d'en bloquer ou limiter conséquemment l'utilisation.

Une autre attaque connue consiste, par exemple, à utiliser des mots de passe définis par défaut, lors de la fabrication d'un équipement, pour tenter de se connecter à cet équipement et de le reconfigurer.

Le document US2018109492 décrit un procédé d'isolation d'un nœud d'un réseau permettant le réacheminement du trafic visible par ce nœud vers un serveur, en vue d'une analyse et d'un apprentissage automatisé visant à former un modèle comportemental. Dans le cas d'un objet connecté via une liaison sans fil, le document décrit la mise en place d'un réseau isolé dont une terminaison est identifiable par un identifiant de service SSID (du sigle anglais « Service Set Identifier ») unique qu'il convient de renseigner lors d'une étape de configuration de l'objet. Cette technique d'isolation et d'analyse d'un équipement nœud d'un réseau apparaît complexe.

La demande de brevet WO2019/084340A1 traite d'un système et d'un procédé pour fournir un réseau VLAN (de l'anglais « *virtual local area network* ») sécurisé dans un réseau sans fil, permettant de fournir une ségrégation du trafic réseau, et de définir des priorités, par exemple en lien avec une qualité de service recherchée.

La demande de brevet US2017/134416A1 divulgue un procédé de sécurisation d'un réseau local sans fil (WLAN), selon lequel un contrôleur SDN émet une commande qui conduit un appareil point d'accès à faire transiter une station vers un sous-réseau isolé lorsqu'un problème concernant la sécurité a été identifié.

### EXPOSE DE L'INVENTION

La présente invention vise notamment à sécuriser un réseau informatique ou un réseau de communication en isolant dans une zone délimitée du réseau, dite « zone de mise en quarantaine », un équipement connecté via une interface sans fil et ayant été préalablement identifié comme présentant des risques pour la sécurité de ce réseau.

Il est entendu ici par les termes « sécurité d'un réseau » les utilisations visant à garantir une disponibilité normale des services proposés par les dispositifs qui forment le réseau et préserver l'intégrité des données stockées dans ces dispositifs, ainsi que leur confidentialité, le cas échéant.

A cet effet, l'invention a pour objet de proposer un procédé de sécurisation des accès à un réseau, exécuté par un dispositif de sécurisation d'accès comprenant au moins un dispositif de connexion sans fil de type point d'accès au réseau et un dispositif de routage de trames de données, le réseau comprenant un premier sous-réseau dit « zone de confiance » et un second sous-réseau dit « zone de mise en quarantaine », le dispositif de routage étant configuré pour qu'une station, connectée au réseau par association avec le dispositif de connexion sans-fil grâce à un premier identifiant de sous-réseau, puisse accéder à des dispositifs tiers connectés dans la zone de confiance, et pour qu'une station connectée au réseau par association avec dispositif de connexion sans-fil grâce à un second identifiant de sous-réseau ne puisse pas accéder à des dispositifs tiers connectés dans la zone de confiance et puisse accéder à des dispositifs tiers connectés dans la zone de mise en quarantaine, le procédé comprenant :
- émettre par le dispositif de connexion sans-fil, des trames d'information comprenant un identifiant de réseau de type SSID (du sigle anglais « Service Set Identifier ») commun à la zone de confiance et à la zone de mise en quarantaine,
- recevoir, par le dispositif de connexion sans-fil, une requête en association émise par une station, la requête comprenant l'identifiant de réseau SSID commun à la zone de confiance et à la zone de mise en quarantaine,
- déterminer, par un contrôleur d'accès, un paramètre représentatif d'accès réalisés dans ledit réseau par la station émettrice de la requête en association,
- octroyer conditionnellement, par le contrôleur d'accès, à la station émettrice de la requête en association, une autorisation d'accéder, à la zone de confiance, via le dispositif de connexion sans-fil selon ledit paramètre, et en cas de refus d'accès à la zone de confiance, d'octroyer, à ladite station, une autorisation d'accéder à la zone de mise en quarantaine,
le procédé comprenant en outre :
- refuser une autorisation d'accès à la zone de confiance et accorder une autorisation d'accès à la zone de quarantaine à toute station qui se connecte pour la première fois au réseau de communication, et
- accorder une autorisation d'accès à la zone de confiance à la station et refuser une autorisation d'accès à la zone de quarantaine à la station lorsqu'aucun accès de la station au réseau de communication n'est identifié comme étant délictueux au regard de règles de sécurité définies, pendant une durée prédéterminée à compter de la première connexion de ladite station au réseau de communication.

Avantageusement, il est ainsi possible d'isoler un dispositif identifié comme ne répondant pas aux exigences de sécurité définies pour le réseau, dans une zone de mise en quarantaine du réseau, exclue de la zone dite zone de confiance. Le dispositif identifié comme ne répondant pas aux exigences de sécurité, pourra, par exemple, accéder à un réseau étendu, comme internet, mais ne pourra pas accéder à un réseau local sécurisé. Selon cet exemple, l'accès à internet est rendu possible via la zone de mise en quarantaine.

Un autre avantage est qu'il est possible de donner accès à internet à une « nouvelle » station, après une première connexion au réseau de communication, puis de lui donner accès au réseau local ultérieurement, sans avoir à reconfigurer cette station.

Le procédé, selon l'invention, peut également comporter les caractéristiques suivantes, considérées seules ou en combinaison :
- Les premier et second identifiants de sous-réseau sont des identificateurs d'ensemble de services de base (BSSID, de l'anglais « Basic Service Set Identifier ») préférentiellement implémentés sous la forme d'adresses MAC (du sigle anglais « Medium Access Control ») au sens de la norme IEEE802.11 ou l'une de ses évolutions.
- Le procédé de sécurisation utilise un second dispositif de connexion sans-fil de type point d'accès audit réseau, les premier et second identifiants de réseau étant respectivement des BSSID ou des identifiants de type adresse MAC du dispositif de connexion sans-fil et du second dispositif de connexion sans-fil, et l'autorisation d'accéder à la zone de mise en quarantaine est conditionnée à des accès réalisés via le second dispositif de connexion sans fil pour accéder à un dispositif dans cette zone.
- Le contrôleur utilise une liste d'identifiants (par exemple des adresses MAC) des stations autorisées à opérer des accès à la zone de confiance ou interdites d'accès à la zone de confiance, selon le paramètre déterminé.
- Le procédé comprend une étape pour désassocier une station du dispositif de connexion sans-fil, selon le paramètre déterminé.
- Le procédé comprend en outre une étape pour, en cas de refus d'accès à la zone de confiance, pour une station, isoler cette station en lui interdisant d'accéder à la zone de mise en quarantaine, et l'autoriser à accéder à un troisième sous-réseau identifiable par cette station au moyen de l'identifiant de réseau SSID commun.

Un autre objet de l'invention est de proposer un dispositif de sécurisation d'accès à un réseau comprenant au moins un dispositif de connexion sans-fil de type point d'accès audit réseau et un dispositif de routage de trames de données, le dispositif de sécurisation d'accès comprenant une première interface de connexion à un premier sous-réseau dit « zone de confiance » du réseau, une seconde interface de connexion à un second sous-réseau dit « zone de mise en quarantaine » du réseau, et un dispositif de routage configuré pour qu'une station, connectée au réseau par association avec le dispositif de connexion sans-fil grâce à un premier identifiant de sous-réseau, puisse accéder à des dispositifs tiers connectés dans la zone de confiance, et pour qu'une station connectée au réseau par association avec le dispositif de connexion sans-fil grâce à un second identifiant de sous-réseau ne puisse pas accéder à des dispositifs tiers connectés dans la zone de confiance et puisse accéder à des dispositifs tiers connectés dans la zone de mise en quarantaine, le dispositif de sécurisation des accès comprenant :
- un émetteur configuré pour émettre par le dispositif de connexion sans-fil, des trames d'information (de type trame balise « beacon », par exemple) comprenant un identifiant de réseau de type SSID, commun à la zone de confiance et à la zone de mise en quarantaine,
- un récepteur configuré pour recevoir, par le dispositif de connexion sans-fil une requête en association émise par une station, la requête comprenant l'identifiant de réseau SSID commun à la zone de confiance et à la zone de mise en quarantaine,
- un contrôleur d'accès configuré pour déterminer un paramètre représentatif d'accès réalisés dans ledit réseau par la station émettrice de la requête en association et pour octroyer conditionnellement, à la station émettrice de la requête en association, une autorisation d'accéder, à la zone de confiance, via le dispositif de connexion sans fil selon ledit paramètre, et, en cas de refus d'accès à la zone de confiance, octroyer à cette station une autorisation d'accéder à la zone de mise en quarantaine,
le contrôleur d'accès étant en outre configuré pour refuser une autorisation d'accès à la zone de confiance et accorder une autorisation d'accès à la zone de quarantaine à toute station qui se connecte pour le première fois au réseau de communication, et pour accorder une autorisation d'accès à la zone de confiance à la station et refuser une autorisation d'accès à la zone de quarantaine à la station lorsqu'aucun accès de la station n'est identifié comme étant délictueux au regard de règles de sécurité définies pendant une durée prédéterminée à compte de la première connexion de la station au réseau de communication.

Le dispositif de sécurisation d'accès peut en outre être configuré pour implémenter des fonctions de passerelle d'accès entre un réseau étendu et un réseau local, et être ce qui est communément appelé « passerelle réseau » ou « gateway ».

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre un réseau de communication dans lequel est exécuté un procédé de sécurisation dans un dispositif de sécurisation d'accès, selon un mode de réalisation particulier et non limitatif de l'invention.
[Fig. 2] est une représentation schématique de l'architecture d'un dispositif de connexion sans fil de type point d'accès utilisé par le procédé dans le dispositif de sécurisation d'accès.
[Fig. 3] illustre une variante du réseau de communication déjà représenté sur la Fig. 1 utilisant un second dispositif de connexion sans fil de type point d'accès.
[Fig. 4] est un ordinogramme illustrant des étapes du procédé de sécurisation selon l'invention.
[Fig. 5] est une représentation schématique d'un dispositif de sécurisation d'accès selon un mode de réalisation particulier et non limitatif de l'invention.
[Fig. 6] est une représentation schématique d'une émission de trames d'information pour deux sous-réseaux, par un unique dispositif de connexion sans fil, pour proposer une connexion à deux sous-réseaux présentés chacun grâce à un identifiant de réseau SSID commun.

### EXPOSE DETAILLE DE MODES DE REALISATION

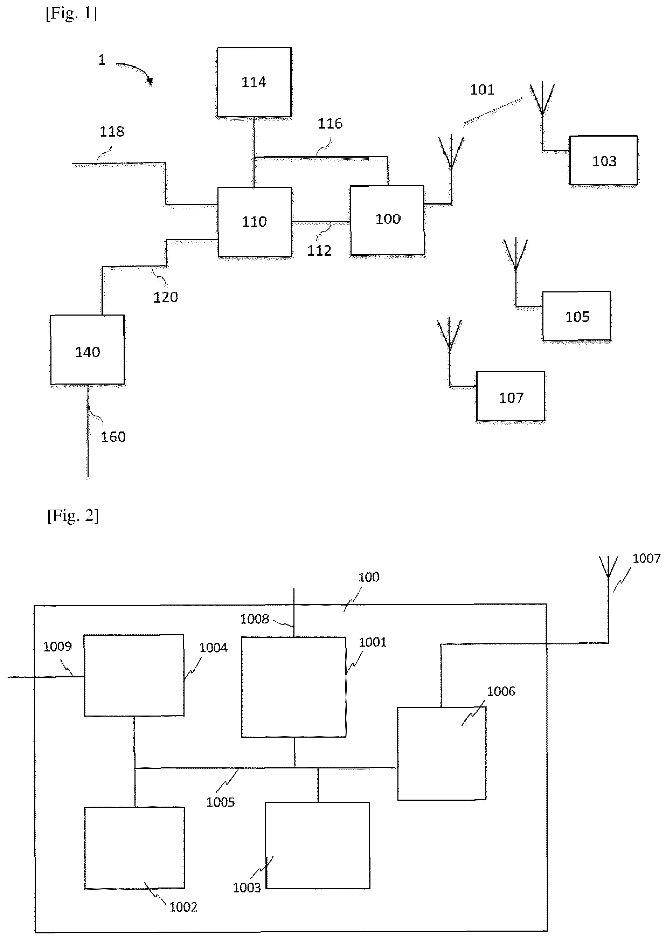

La **Fig. 1** illustre schématiquement un réseau informatique 1, encore appelé réseau de communication 1, comprenant des dispositifs reliés au réseau de communication 1 par connexion filaire et des dispositifs reliés au réseau de communication 1 par connexion sans fil. Le réseau de communication 1 comprend un dispositif de connexion sans fil 100 (encore appelé communément point d'accès) permettant à une station fixe ou mobile compatible avec le dispositif de connexion sans fil 100 de se connecter au réseau de communication 1 via un système antennaire. Des stations 103, 105 et 107 sont configurées pour pouvoir se connecter via une liaison sans fil au réseau de communication 1 par l'intermédiaire du dispositif de connexion sans fil 100. Le réseau de communication 1 comprend un premier sous-réseau local 118 et un second sous-réseau local 120. Chacun des sous-réseaux 118 et 120 comprend des dispositifs reliés à d'autres dispositifs par des connexions filaires ou sans fil (non représentés sur la figure). Les sous-réseaux 118 et 120 sont reliés par un dispositif de routage 110, encore appelé « routeur », lequel est en outre relié au dispositif de connexion sans fil 100. Un dispositif d'interconnexion 140 est configuré pour interconnecter le sous-réseau local 120 à un réseau étendu 160. Le dispositif d'interconnexion 140 est configuré pour établir un pont de communication (« bridge » en anglais). Le réseau étendu 160 comprend une connexion au réseau étendu internet. Un contrôleur d'accès 114 est connecté au dispositif de routage 110 et au dispositif de connexion sans fil 100. Le contrôleur d'accès 114 est adapté à la configuration et la supervision du dispositif de routage 110 et du dispositif de connexion sans fil 100. Le dispositif de connexion sans fil 100 est connecté au contrôleur d'accès 114 par l'intermédiaire d'un bus de contrôle 116 et au dispositif de routage 100 par l'intermédiaire d'un lien réseau 112.

Le réseau de communication 1 est adapté à la transmission de données entre les stations 103, 105 et 107 avec les différents dispositifs connectés aux sous-réseaux 118 et 120 ainsi qu'au réseau étendu 160.

Avantageusement, et selon l'invention, le réseau de communication 1 comprend une zone dite « zone de confiance » et une zone dite « zone de mise en quarantaine ». Selon le mode de réalisation préféré de l'invention, la zone de confiance est le sous-réseau 118 qui est un réseau local privé et la zone de mise en quarantaine est le sous-réseau 120 qui est un réseau local raccordé au réseau étendu 160 à travers le dispositif d'interconnexion 140 de type bridge.

Pour ce faire, le dispositif de routage 110 est configuré pour qu'une station parmi les stations 103, 105 et 107, connectée au réseau de communication 1 par association avec le dispositif de connexion sans fil 100 grâce au premier identifiant de réseau 1180, puisse accéder à des dispositifs tiers connectés dans la zone de confiance, et pour qu'une station parmi les stations 103, 105 et 107, connectée au réseau 1 par association avec le dispositif de connexion sans fil 100 grâce à un second identifiant de réseau 1200 ne puisse pas accéder à des dispositifs tiers connectés dans la zone de confiance 118 et puisse accéder à des dispositifs tiers connectés dans la zone de mise en quarantaine 120.

Pour ce faire, le dispositif de routage 110 utilise un filtrage sur des adresses IP (du sigle anglais « Internet Protocol ») distribuées par un ou des serveurs DHCP lors de la connexion d'un dispositif au réseau de communication 1.

L'identifiant de réseau 1180 identifie le sous-réseau 118 dit « zone de confiance » et l'identifiant 1200 identifie le sous-réseau 120 dit « zone de mise en quarantaine ». Ces identifiants sont par exemple des identificateurs d'ensembles de services communément appelés BSSID au sens de la norme IEEE802.11 ou l'une quelconque de ses évolutions. Ces BSSID sont préférentiellement implémentés sous forme d'adresses MAC, toujours au sens de la norme IEEE802.11 ou l'une quelconque de ses évolutions.

Le procédé selon l'invention permet astucieusement de présenter le sous-réseau 118, c'est-à-dire la zone de confiance, et le sous-réseau 120, c'est-à-dire la zone de mise en quarantaine, comme deux offres de services de réseau identifiables via un identifiant SSID commun 1300, par une station mobile disposée dans la portée du dispositif de connexion sans fil 100. L'identifiant commun est préférentiellement de type SSID au sens de la norme IEEE 802.11 ou l'une quelconque de ses évolutions. Selon un mode de réalisation de l'invention, le dispositif de connexion sans fil 100 émet des trames d'information réseau qui visent à informer une station fixe ou mobile de la présence d'un dispositif de connexion à un réseau et de la présence des offres de services réseau accessibles via une connexion sans fil. Les trames d'information comprennent, entre autres informations, un identifiant du réseau auquel il est possible de se connecter comme, par exemple une adresse MAC d'un dispositif de connexion sans fil ou un identifiant de port de connexion, ainsi qu'un identifiant du réseau vu par une station, soit un SSID, par exemple. Ainsi, grâce à l'exécution du procédé selon l'invention, une station mobile parmi les stations 103, 105 et 107, configurée pour une connexion à une offre de service réseau en correspondance de l'identifiant SSID commun 1300 est en capacité de solliciter une connexion à la zone de confiance 118 ou à la zone de mise en quarantaine 120, selon d'autres paramètres. Le procédé selon l'invention utilise un paramètre 200 représentatif d'accès réalisés dans le réseau de communication 1 par chacune des stations 103, 105 et 107 potentiellement émettrices d'une requête en association avec le dispositif de connexion sans fil 100. Les termes « paramètre représentatif d'accès réalisés dans le réseau » sont à interpréter ici comme une catégorisation du comportement d'une station parmi les stations 103, 105 et 107, en termes d'accès réalisés sur le réseau de communication 1, lorsqu'elle est connectée ou a été connectée au réseau de communication 1. Par exemple, le paramètre 200 peut prendre une valeur représentative du respect ou du non-respect de règles de sécurité ou de comportement définies et satisfaisantes à un niveau de sécurité recherché dans le réseau de communication 1. Les règles de sécurité sont par exemple définies par un administrateur du réseau de communication 1 et peuvent être modifiées dans le temps. Selon un autre exemple, les règles de sécurité peuvent être standardisées et établies par des spécialistes de la sécurité des réseaux informatiques, à partir d'attaques précédemment observées. Ainsi, selon un premier exemple, une valeur 0 du paramètre 200 indique que la station correspondante ne satisfait pas aux règles de sécurité définies pour le réseau de communication 1 et une valeur 1 du paramètre 200 indique que la station satisfait aux règles de sécurité définies pour le réseau de communication 1. Le respect des règles de sécurité peut être évalué par l'absence d'accès en infraction avec les règles définies. Les règles de sécurité définies peuvent évoluer dans le temps, de sorte qu'une station jugée conforme aux règles de sécurité puisse devenir non conforme, et vice-versa. Si, par exemple, une station effectue des opérations répétées de tentative de connexion à un port de configuration d'un dispositif du réseau normalement accessible à un utilisateur ayant des privilèges d'administrateur du réseau de communication 1, il est considéré que la station enfreint une règle de sécurité et que cette station n'est pas en conséquence conforme aux exigences de sécurité définies dans le réseau de communication 1. Selon un autre exemple, si une station opère des accès à une même machine distante identifiée par son adresse IP, de façon très régulièrement répétée, et avec un profil de répétition qui laisse penser qu'il pourrait s'agir d'une attaque en déni de service, là encore, le paramètre représentatif d'accès réalisés est déterminé de sorte à indiquer que la station ne satisfait pas aux exigences de sécurité requises pour le réseau de communication 1. Selon un autre exemple encore, le paramètre peut prendre une valeur parmi une dizaine de valeurs, par exemple (une note sur 10, ou encore un indice), calculée par rapport à plusieurs critères combinés et définir un niveau de conformité aux exigences de sécurité définies pour le réseau de communication 1, ou un niveau de manquement aux exigences de sécurité ou encore un niveau de risque vis-à-vis des autres dispositifs connectés au réseau de communication 1 et des données qu'ils contiennent respectivement. Le paramètre 200 ainsi défini permet donc d'évaluer le « danger » que représente une station connectée au réseau de communication 1 pour les autres dispositifs connectés au réseau de communication 1 et pour l'intégrité ou la confidentialité des données qui y sont stockées. Le paramètre 200 représentatif des accès réalisés constitue ainsi un indice de sécurité qui peut être obtenu par comparaison d'accès réalisés par la station correspondante avec des accès types définis selon un catalogue d'accès dont le type et/ou la répartition spatiale ou temporelle sont jugés « délictueux » au sein du réseau de communication 1. Un paramètre 200 représentatif des accès réalisés est déterminé pour chacune des stations 103, 105 et 107. Le paramètre 200 est déterminé sous le contrôle du contrôleur d'accès 114 qui scrute pour ce faire l'ensemble des paquets de données transitant par le dispositif de routage 110, en provenance ou à destination du dispositif de connexion sans fil 100. Les paquets de données qui transitent sont analysés en détails de sorte à définir pour chacun des paquets sa provenance, sa destination et si le contenu est corrélé avec un type d'accès référencé dans le catalogue des accès jugés délictueux au regard des règles de sécurité définies pour le réseau de communication 1.

Avantageusement, et selon le procédé de sécurisation selon l'invention, lorsqu'une station parmi les stations 103, 105 et 107 présente un paramètre 200 représentatif d'accès réalisés non conforme aux règles de sécurité définies, la station est mise en quarantaine par interdiction de se connecter à la zone de confiance 118 et autorisation de se connecter à la zone de mise en quarantaine 120. Avantageusement, toutes les stations mobiles ou fixes qui présentent un paramètre 200 représentatif d'accès réalisés non conforme aux règles de sécurité définies pour le réseau de communication 1 sont mises en quarantaine et l'ensemble des stations mobiles ou fixes qui présentent un paramètre représentatif d'accès réalisés conforme aux règles de sécurité définies pour le réseau de communication 1 sont automatiquement connectées à la zone de confiance, de sorte à isoler les dispositifs non conformes aux règles de sécurité des dispositifs conformes aux règles de sécurité. Selon le mode de réalisation préféré de l'invention, l'autorisation de se connecter à la zone de quarantaine 120 et l'interdiction de se connecter à la zone de confiance 118, ou vice-versa, sont réalisées par filtrage réalisé sur des identifiants des stations, tels que l'adresse MAC (de l'anglais « Medium Access Control »), par exemple. Ainsi, le contrôleur d'accès 114 utilise préférentiellement une table d'adresses MAC autorisées ou d'adresses MAC interdites pour chacune des zones de confiance 118 et de mise en quarantaine 120. Lorsqu'une station n'est pas encore connue du contrôleur d'accès 114 et donc que son comportement sur le réseau n'a pas pu être évalué, en termes de conformité aux règles de sécurité définies, cette station est initialement considérée comme non conforme aux règles de sécurité. En l'absence d'accès réalisés identifiés comme délictueux pendant une durée prédéterminée à partir de sa première connexion au réseau de communication 1, la station est considérée comme conforme aux règles de sécurité définies pour le réseau de communication 1. Ainsi, une station non encore connue du réseau de communication 1 ne peut se connecter qu'à la zone de mise en quarantaine pour sa première connexion au réseau de communication 1 et le contrôleur d'accès 114 l'autorisera ensuite, au terme d'une période d'évaluation, à se connecter à la zone de confiance 118, dans le cas où les accès réalisés par cette station satisfont aux règles de sécurité définies. Il va être décrit ci-après une séquence de connexion de la station mobile 103 non encore connue du réseau de communication 1, suivie d'une mise en quarantaine de cette station par connexion automatique à la zone de mise en quarantaine 120, puis d'une connexion automatique de la station à la zone de confiance 118 et enfin d'une corruption de l'intégrité de la station 103 au regard des règles de sécurité en vigueur dans le réseau de communication 1 et d'une mise en quarantaine de la station 103 par connexion automatique de la station 103 à la zone de mise en quarantaine 120.

Une telle séquence est initiée par l'émission, par le dispositif de connexion sans fil 100, de trames d'information 200 comprenant un identifiant SSID commun 1300 à la zone de confiance 118 et à la zone de mise en quarantaine 120. Cette trame d'information est par exemple une trame balise « beacon » telle que définie dans le standard 802.11 ou l'une quelconque de ses évolutions. Les trames d'information beacon émises sont reçues par la station 103 qui identifie les offres de services correspondant à la zone de confiance 118 et à la zone de mise en quarantaine 120, lesquelles offres sont toutes deux identifiables au moyen du même identifiant commun de type SSID. Par exemple le SSID des trames d'information beacon pour la zone de confiance est « réseau 1 » et le SSID des trames d'information beacon pour la zone de mise en quarantaine est « réseau 1 » également. En d'autres termes, la zone de mise en quarantaine est un clone de la zone de confiance vu depuis la station mobile 103. La station mobile 103, configurée pour se connecter à un réseau identifié par l'identifiant « réseau 1 », envoie une trame, en réponse à une trame d'information beacon, visant à solliciter une association avec le dispositif de connexion sans fil 100, en vue d'une connexion au réseau identifié par l'identifiant « réseau 1 ». Cette trame comprend une requête en association avec le dispositif de connexion sans fil 100 pour une connexion au réseau intitulé « réseau 1 ». Cette trame comprend en outre l'adresse MAC de la station 103. A la réception de cette trame, le dispositif de connexion sans fil 100 adresse une copie de la trame au contrôleur d'accès 114. Le contrôleur d'accès 114 effectue une comparaison de l'adresse MAC de la station 103 et constate que cette station n'a jamais été connectée au réseau de communication 1. Faute d'avoir pu préalablement qualifier le comportement de la station 103 au regard des règles de sécurité définies pour le réseau de communication 1, la station mobile 103 est alors identifiée par le contrôleur d'accès 114 comme n'étant pas conforme aux règles de sécurité, son paramètre 200 représentatif des accès réalisés est déterminé en conséquence, et son adresse MAC est inscrite sur une liste d'adresses MAC interdites de connexion à la zone de confiance 118 par le biais du dispositif de routage 110. Selon un raisonnement similaire, l'adresse MAC de la station mobile 103 n'est pas inscrite sur une liste d'adresses MAC interdites à une connexion à la zone de mise en quarantaine 120. Si la requête en association au réseau « réseau 1 » émise depuis la station mobile 103 vers le dispositif de connexion à distance 100 était émise en réponse à une trame d'information beacon correspondant à la zone de confiance 118, la requête en association comprend un identifiant (un numéro de port d'association, par exemple) de la zone de confiance 118 et le dispositif de connexion sans fil 100 interprète la requête en association au « réseau 1 » comme une requête en association à la zone de confiance 118. Le dispositif de connexion sans fil rejette alors la requête en association puisque l'adresse MAC de la station 103, émettrice de la requête en association, est inscrite sur la liste d'adresses MAC interdites de connexion à la zone de confiance 118. Le refus est ainsi réalisé grâce à un filtrage d'adresses MAC. Le dispositif de connexion sans fil 100 notifie alors à la station mobile 103 un refus de procéder à une association avec cette dernière et la station 103 réitère l'envoi d'une requête en association en réponse à une réception d'une trame d'information beacon comprenant le SSID « réseau 1 ». Lorsque la station mobile 103 envoie une requête en association en réponse à une trame d'information beacon faisant référence au « réseau 1 » mais comportant un identifiant (un numéro de port d'association, par exemple) de la zone de mise en quarantaine, ce qui survient du fait des lois de probabilités, le dispositif de connexion sans fil 100 acceptera l'association puisque l'adresse MAC de la station mobile 103 est inscrite sur la liste des adresses MAC autorisées à opérer une connexion à la zone de mise en quarantaine 120 ou n'est pas inscrite sur la liste des adresses MAC interdites d'accès à la zone de mise en quarantaine 120. Selon l'invention, autant de trames d'information beacon comprenant l'identifiant commun « réseau 1 » et un identifiant de la zone de confiance que de trames d'information beacon comprenant l'identifiant commun « réseau 1 » et un identifiant de la zone de mise en quarantaine sont émises, si bien que la probabilité que la station mobile 103 réponde à une trame d'information correspondant à la zone de mise en quarantaine 120 est très importante, et la station mobile 103 émet une requête en association au « réseau 1 » correspondant à la zone de mise en quarantaine 120 dans un délai réduit. Dès que la station mobile 103 est connectée à la zone de mise en quarantaine 120 du réseau de communication vu comme « réseau 1 », elle interagit avec des dispositifs connectés au réseau de communication 1 dans la zone de mise en quarantaine 120. Elle peut par exemple se connecter à des dispositifs distants à travers le réseau internet. La station mobile 103, ainsi connectée, ne peut interagir avec des dispositifs connectés dans la zone de confiance 118 puisque le dispositif de routage 110 est configuré pour isoler la zone de confiance 118 et la zone de mise en quarantaine 120. Durant les accès réalisés, le contrôleur d'accès 114 analyse les paquets de données qui transitent entre la station mobile 103 et des dispositifs de la zone de mise en quarantaine 120 et détermine ou actualise le paramètre 200 représentatif d'accès opérés par la station mobile 103 dans la zone de mise en quarantaine 120. Au terme d'une période d'observation et de qualification d'une durée prédéterminée, le contrôleur d'accès 114 détermine, en l'absence d'accès jugés délictueux au regard des règles de sécurité définies, que la station mobile 103 est conforme aux règles de sécurité. Le contrôleur d'accès retire alors l'adresse MAC de la station mobile 103 de la liste des adresses interdites d'accès à la zone de confiance 118 et inscrit l'adresse MAC de la station mobile 103 sur la liste des adresses interdites de connexion à la zone de mise en quarantaine 120. Après cette mise à jour des listes d'adresses MAC utiles au filtrage par adresse MAC, le dispositif de connexion sans fil 100 opère sous contrôle du contrôleur d'accès 114 une désassociation (forcée) de la station mobile 103 et du dispositif de connexion sans fil 100. Le dispositif de connexion sans fil 100 force ainsi une déconnexion de la station mobile 103 du réseau de communication 1 et plus précisément de la zone de mise en quarantaine 120. La station mobile 103 ainsi déconnectée opère alors des tentatives de reconnexion au « réseau 1 » pour lequel des trames d'information beacon sont toujours diffusées régulièrement, comprenant le SSID « réseau 1 » commun pour la zone de confiance 118 et pour la zone de mise en quarantaine 120. Selon le même schéma de probabilité que décrit précédemment, la station mobile envoie dans un délai bref une requête en association au dispositif de connexion sans fil 100 en vue d'une association avec le « réseau 1 » et en réponse à une trame d'information beacon comprenant l'identifiant de réseau 1180 de la zone de confiance 118 (un BSSID sous forme d'adresse MAC, par exemple). La station mobile 103 se voit alors accorder une connexion à la zone de confiance 118 par l'intermédiaire du dispositif de connexion sans fil 100, sur la base d'un filtrage d'adresse MAC opéré suite à la mise à jour des listes d'adresses MAC interdites. La station mobile 103 est autorisée à se connecter à la zone de confiance 118 et à y accéder jusqu'à ce que le contrôleur d'accès 114 détecte, le cas échéant, un ou des accès jugés délictueux au regard des règles de sécurité définies dans le réseau de communication 1. Dans le cas où le contrôleur d'accès 114 détecte un ou plusieurs accès jugés délictueux et de nature à impacter le paramètre représentatif d'accès réalisés et à considérer alors la station mobile 103 comme devenue non conforme aux règles de sécurité définies dans le réseau de communication 1, le contrôleur d'accès 114 opère une nouvelle mise à jour des listes d'adresses MAC de filtrage, de sorte à autoriser la station mobile 103 à se connecter à la zone de mise en quarantaine 120 et à lui interdire une connexion à la zone de confiance 118. Une nouvelle désassociation (forcée), initiée par le dispositif de connexion sans fil 100 sous contrôle du contrôleur d'accès 114 entraîne alors une connexion automatique de la station mobile 103 à la zone de mise en quarantaine 120.

Avantageusement, si la station mobile 103 dont le comportement en termes d'accès sur le réseau de communication 1 est corrompue, par exemple du fait d'une insertion d'un logiciel malveillant, tel qu'un virus, ou encore du fait d'une utilisation non conforme aux règles de sécurité, cette station mobile 103 est automatiquement mise en quarantaine par connexion à la zone de mise en quarantaine 120 du réseau de communication 1, et isolée de la zone de confiance 118 du réseau de communication 1, sans requérir de modification de la configuration de la station mobile 1 ou du dispositif de connexion sans fil 100. La seule modification requise dans le réseau de communication 1 étant la mise à jour des tables d'adresses MAC correspondant à des listes d'adresses autorisées ou interdites, respectivement associées à l'un ou l'autre des sous-réseaux du réseau de communication 1 que sont la zone de confiance 118 et la zone de mise en quarantaine 120.

Une telle configuration illustre bien la capacité à isoler, grâce à l'implémentation du procédé selon l'invention, des dispositifs connectés à la zone de mise en quarantaine 120 de dispositifs connectés à la zone de confiance 118. Cette configuration n'est toutefois pas à interpréter limitativement et bien évidemment, selon une variante du mode de réalisation de l'invention, la zone de confiance 118 peut également disposer d'un accès au réseau étendu 160 à travers le dispositif d'interconnexion 140, et en conséquence disposer également, par exemple, d'un accès à internet via le réseau étendu 160.

La **Fig. 2** illustre l'architecture interne du dispositif de connexion sans-fil 100 utilisé dans le réseau de communication 1 par le procédé de sécurisation précédemment décrit. Le dispositif de connexion sans fil 100 comprend une unité de contrôle 1001, un module de mémoire non volatile 1002 pour le stockage de paramètres de configuration et de codes logiciels exécutables, un module de mémoire volatile 1003 pour l'exécution de codes logiciels exécutables par l'unité de contrôle 1001, une interface de communication par ondes radioélectriques 1006 couplée à un système antennaire 1007. L'interface de communication 1006 et le système antennaire 1007 sont préférentiellement compatibles avec la norme communication sans fil IEEE 802.11 et ses évolutions /a, /b, /g, /n, /ac, /ax. Le dispositif de connexion sans fil 100 comprend en outre une interface 1009 adaptée à une connexion à un réseau de communication filaire de type Ethernet. Selon une variante du mode de réalisation, l'interface 1009 peut être de type sans fil. L'interface de connexion 1009 à un réseau de communication est notamment configurable pour une connexion au dispositif de routage 110 du réseau de communication 1, via un bus de connexion 1009, et permet le transfert de données depuis et vers le réseau de communication 1 (via le dispositif de routage 110) et depuis et vers l'interface de communication par ondes radioélectriques 1006. Ces modules internes du dispositif de connexion 100 sont reliés ensemble par un bus de contrôle / commande / données commun 1005, géré par l'unité de contrôle 1001. L'unité de contrôle 1001 comprend en outre un port de connexion 1008 pour le raccordement à un contrôleur d'accès extérieur. Ce port de connexion 1008 est un port de configuration adapté au contrôle du dispositif de connexion sans fil 100 par le contrôleur d'accès 114. Ainsi, le contrôleur d'accès 114 peut configurer le dispositif de connexion sans fil 100, et notamment définir des paramètres du dispositif de connexion sans fil 100 tels que l'identifiant SSID « réseau 1 » de la zone de confiance, l'identifiant SSID « réseau 1 » de la zone de mise en quarantaine (identique à celui de la zone de confiance), la périodicité d'émission des trames d'information « balises » de type beacon, ainsi que de nombreux autres paramètres. Le fonctionnement du dispositif de connexion sans fil 100 n'est pas décrit ici plus encore car n'étant pas utile à la compréhension de l'invention.

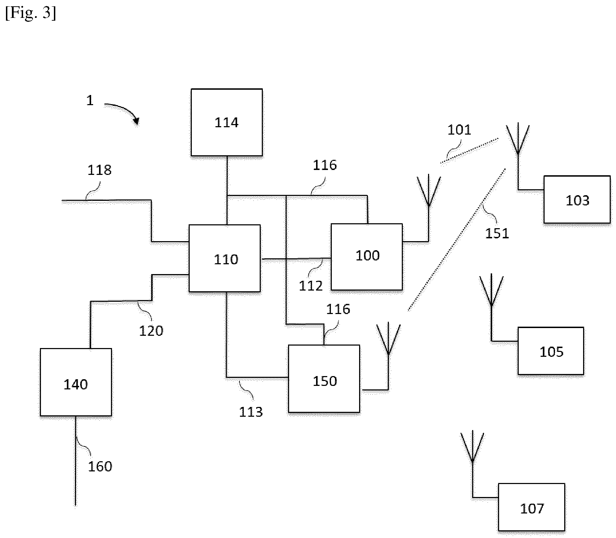

La **Fig.3** illustre schématiquement le réseau de communication 1 selon une variante du mode de réalisation de l'invention. Selon cette variante, le réseau de communication 1 comprend un second dispositif de connexion sans fil 150 semblable au dispositif de connexion sans fil 100. Le dispositif de connexion sans fil 150 est connecté au contrôleur d'accès 114 par l'intermédiaire du bus de contrôle 116 et au dispositif de routage 100 par l'intermédiaire d'un lien réseau 113. Ainsi, les stations mobiles 103, 105 et 107 peuvent possiblement se connecter au dispositif de connexion sans fil 100 ou au dispositif de connexion sans fil 150. La figure décrit un lien de connexion sans fil 101 possible entre la station mobile 103 et le dispositif de connexion sans fil 100 ou encore un lien de connexion sans fil 151 possible entre la station mobile 103 et le dispositif de connexion sans fil 150, à titre d'exemples.

Selon cette variante du mode de réalisation, les SSID respectivement associés à la zone de confiance 118 et à la zone de mise en quarantaine 120 ne sont pas émis par un même dispositif de connexion sans fil, mais par deux dispositifs de connexion sans fil distincts que sont les dispositifs de connexion sans fil 100 et 150.

Ainsi, par exemple, l'émission du SSID commun « réseau 1 » 1300 par le dispositif de connexion sans fil 100 correspond à une offre de services réseau correspondant à une connexion possible à la zone de confiance 118 et l'émission du SSID commun « réseau 1 » 1300 par le dispositif de connexion sans fil 150 correspond à une offre de service réseau correspondant à une connexion possible à la zone de mise en quarantaine 120 du réseau de communication 1. L'identifiant 1180 de sous-réseau de la zone de confiance 118 peut être l'adresse MAC du dispositif de connexion sans fil 100 et l'identifiant 1200 de sous-réseau de la zone de mise en quarantaine peut être l'adresse MAC du dispositif de connexion sans fil 150. Selon cette variante, le dispositif de routage 100 est configuré pour transmettre les paquets de données en provenance et à destination du dispositif de connexion sans fil 100 vers et depuis la zone de confiance 118 et les paquets de données en provenance et à destination du dispositif de connexion sans fil 150 vers et depuis la zone de mise en quarantaine 120. Avantageusement, cela permet d'obtenir une isolation physique de la zone de confiance et de la zone de mise en quarantaine, outre l'isolation logique des paquets de données qui transitent. Selon cette variante toujours, chacun des dispositifs de connexion sans fil 100 et 150 peut être associé à une liste d'adresses MAC interdites de connexion, selon le procédé précédemment décrit. Ainsi, et en considérant les exemples de connexion et déconnexion automatique précédemment décrits, une station telle que, par exemple, la station mobile 103, n'est en capacité de se connecter qu'à la zone pour laquelle elle ne figure pas sur la liste des adresses MAC interdites de connexion. Les listes d'adresses MAC interdites de connexion pour la zone de confiance 118 et la zone de mise en quarantaine 120 étant mises à jour sous le contrôle du contrôleur d'accès 114, à partir des observations réalisées sur le réseau de communication 1 et en particulier sur la détection d'accès jugés délictueux au regard des règles de sécurité définies dans le réseau de communication 1.

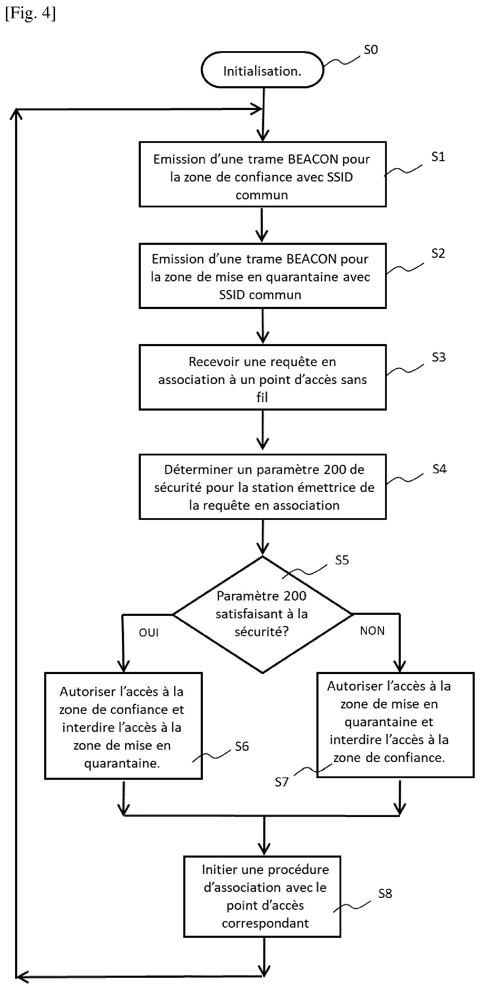

La **Fig. 4** est un ordinogramme représentant le principe du procédé de sécurisation du réseau de communication 1 selon un mode de réalisation particulier et non limitatif de l'invention et selon l'architecture réseau décrite sur la Fig.3. Lorsque les différents dispositifs qui forment le réseau de communication 1 sont normalement opérationnels, le procédé de sécurisation peut être exécuté. C'est le cas au terme d'une étape d'initialisation S0. Le dispositif de connexion sans fil 100 est configuré en tant que point d'accès sans fil à la zone de confiance 118 et le dispositif de connexion sans fil 150 est configuré en tant que point d'accès sans fil à la zone de mise en quarantaine 120. Le dispositif de routage 110 est configuré pour isoler la zone de confiance 118 de la zone de mise en quarantaine 120. Selon une variante du mode de réalisation, le dispositif de routage 110 n'est pas utilisé, la zone de confiance est directement connectée au dispositif de connexion sans fil 100 et la zone de mise en quarantaine 120 est directement connectée au dispositif de connexion sans fil 150.

Le dispositif de connexion sans fil 100 émet, lors d'une étape S1, une trame d'information, encore appelée trame beacon, à destination des dispositifs compatibles avec les modes de connexion sans fil proposés et présents dans la portée du dispositif de connexion sans fil 100. La trame d'information beacon comprend l'adresse MAC du dispositif de connexion sans fil 100 opérant comme un identifiant de la zone de confiance 118 du réseau de communication 1. La trame d'information beacon comprend en outre un identifiant d'offre de services réseau de type SSID, décrivant la présence du réseau de communication 1. Le SSID transmis est, selon l'exemple choisi, « réseau 1 ». De la même façon, le dispositif de connexion sans fil 150 émet, lors d'une étape S2, une autre trame d'information, trame beacon, à destination des dispositifs compatibles avec les modes de connexion sans fil proposés et présents dans la portée du dispositif de connexion sans fil 150. Cette autre trame d'information beacon comprend l'adresse MAC du dispositif de connexion sans fil 150 opérant comme un identifiant de la zone de mise en quarantaine 120 du réseau de communication 1. Cette trame d'information beacon comprend en outre un identifiant d'offre de services réseau de type SSID, décrivant la présence du réseau de communication 1. Le SSID transmis est astucieusement le même que celui émis par le dispositif de connexion sans fil 100, soit « réseau 1 ». Il est considéré que le SSID émis par le dispositif de connexion sans fil 150 clone le SSID émis par le dispositif de connexion sans fil 100. Il est à noter que si un dispositif de connexion sans fil (100 ou 150) utilise plusieurs modules d'émission / réception d'ondes radioélectriques, le clonage du SSID est réalisé selon la gestion courante du SSID par le dispositif de connexion sans fil. En d'autres termes, si le dispositif de connexion sans fil utilise un SSID pour n modules d'émission / réception, alors le SSID sera cloné sur les n modules d'émission / réception et si le dispositif de connexion sans fil utilise un SSID différent par module d'émission / réception, alors le SSID propre à chacun des modules d'émission / réception sera cloné sur ce module d'émission / réception.

La station mobile 103 reçoit les trames d'information beacon et détecte la présence d'un réseau de communication intitulé « réseau 1 ». Cette station mobile 103 peut ainsi être configurée pour se connecter au réseau présenté sous l'intitulé « réseau 1 » par les SSID respectivement transmis par les deux dispositifs de connexion sans fil 100 et 150. La station mobile émet alors, lors d'une étape S3, une trame comprenant une requête en association en réponse à une trame d'information beacon reçue, soit depuis le dispositif de connexion sans fil 100, soit depuis le dispositif de connexion sans fil 150. Cette trame, émise par la station mobile 103, est transférée au contrôleur 114 qui détecte, par exemple, que l'adresse MAC de la station mobile 103 n'est pas connue du réseau de communication 1, et que cette station n'a pas été précédemment connectée au réseau de communication 1. Ainsi, il est déterminé, lors d'une étape S4 un paramètre 200 de sécurité représentatif d'accès réalisés sur le réseau. Selon cet exemple, le paramètre est déterminé de sorte à indiquer lors d'une étape S5 que la station mobile 3 n'est pas conforme aux règles de sécurité définies pour le réseau de communication 1. Dans ce cas, la station mobile 103 est autorisée à accéder à la zone de mise en quarantaine 120 du réseau de communication 1 et interdite d'accès à la zone de confiance 118 du réseau de communication 1. L'interdiction d'accès à la zone de confiance 118 est réalisée par l'inscription de l'adresse MAC de la station mobile 103 sur la liste des adresses MAC interdites d'accès à cette zone. L'autorisation d'accès à la zone de mise en quarantaine 120 est réalisée par un retrait, le cas échéant, de l'adresse MAC de la station mobile 103, de la liste des adresses MAC interdites d'accès à la zone de mise en quarantaine 120, le tout étant réalisé sous le contrôle du contrôleur d'accès 114. Ainsi, le dispositif de connexion (100 ou 150) qui a reçu la trame comprenant une requête en association en provenance de la station mobile 103, accepte ou refuse l'association, soit en d'autres termes la connexion, en opérant un filtrage sur adresse MAC, par comparaison de l'adresse MAC de la station mobile 103, avec la liste d'adresses MAC interdites de connexion. Ce filtrage, en vue d'autoriser ou non l'association, est réalisé lors d'une étape S8 d'initiation d'une procédure d'association entre la station mobile 103 et le dispositif de connexion sans fil concerné. Si l'association est initiée avec le dispositif de connexion sans fil 110, permettant possiblement une connexion à la zone de confiance 118, la requête en association est rejetée puisque la station mobile 103 est identifiée comme étant non conforme aux règles de sécurités définies dans le réseau de communication 1. La station mobile 103 opère alors une ou plusieurs nouvelles tentatives de connexion au « réseau 1 » jusqu'à ce qu'une trame comprenant une requête en association soit émise en réponse à une trame d'information beacon en provenance du dispositif de connexion sans fil 150, lors d'une prochaine itération de la boucle décrite par les étapes S1 à S8, via S6 ou S7, selon la conformité ou la non-conformité de la station mobile 103 aux règles de sécurité définies. Lorsque la station mobile 103 émettra une requête en association en réponse à une trame d'information beacon émise par le dispositif de connexion sans fil 150, ce dispositif acceptera de procéder à une association puisque l'adresse MAC de la station mobile 103 n'apparaît pas dans la liste des adresses MAC interdites de connexion à la zone de mise en quarantaine 120. La station mobile 103, non conforme aux règles de sécurité définies, est ainsi astucieusement automatiquement connectée à la zone de mise en quarantaine 120 du réseau de communication 1. La boucle décrite par les étapes S1 à S8, via l'étape S6 ou l'étape S7 est répétée continuellement, de sorte que, des trames d'information beacon soient émises de façon récurrente et que le paramètre représentatif des accès réalisés par la station mobile 103 sur le réseau de communication 1 puisse être déterminé périodiquement, soit en d'autres termes, puisse être actualisé selon la nature des accès réalisés sur la zone de mise en quarantaine. Ainsi, si par exemple, au terme d'une période d'observation d'une durée prédéterminée, la station mobile 103 n'a pas réalisé d'accès susceptible d'être jugé délictueux au sens des règles de sécurité définies, le contrôleur d'accès 114 déterminera une nouvelle valeur de son paramètre 200 représentatif des accès réalisés de sorte à considérer la station mobile 103 comme étant conforme aux règles de sécurité définies. Ainsi, lors d'une prochaine itération de l'étape S5, la station mobile 103 est jugée comme ayant un comportement conforme à la sécurité et autorisée d'accès à la zone de confiance 118, et en conséquence interdite d'accès à la zone de mise en quarantaine 120. Ces modifications étant effectuées sous contrôle du contrôleur d'accès 114 qui opère continuellement une surveillance des accès réalisés depuis et vers les dispositifs connectés au moyen d'une connexion sans fil, par scrutation des paquets de données qui transitent. Ainsi, après une nouvelle initiation d'une procédure d'association de la station mobile 103 avec le dispositif de connexion sans fil 100, la station mobile 103 pourra être connectée automatiquement à la zone de confiance 118 du réseau de communication 1. Plus généralement, toute modification du paramètre représentatif des accès réalisés par une station mobile sur le réseau de communication 1, entraîne une possible modification de son état de conformité au regard des règles de sécurité définies et une possible mise à jour des listes d'adresses MAC interdites de connexion aux dispositifs de connexion sans fil 100 et 150.

Avantageusement, il est ainsi possible d'isoler des dispositifs connectés via une connexion sans fil au réseau, opérant en conformité avec les règles de sécurité définies, de ceux n'opérant pas ou ne garantissant pas d'opérer en conformité avec ces mêmes règles.

Tout ceci étant réalisé sans requérir de modification de la configuration du réseau autre que des listes d'adresses MAC autorisées ou interdites de connexion aux différents dispositifs de connexion sans fil.

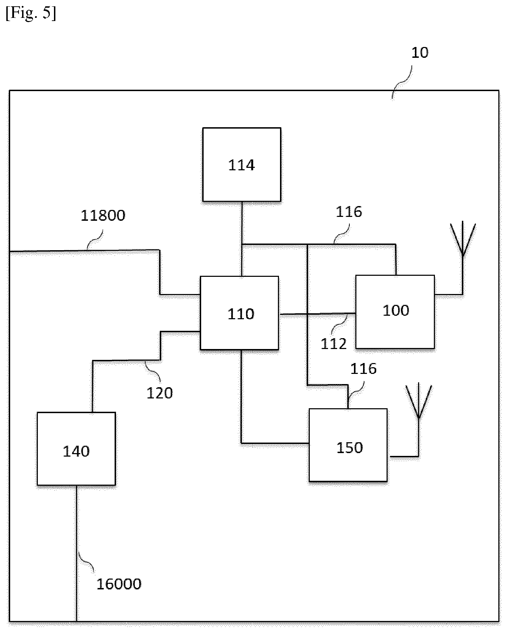

Selon un mode de réalisation préféré de l'invention, les dispositifs de connexion sans fil 100 et 150, le dispositif de routage 110, le contrôleur d'accès 114 et le dispositif d'interconnexion de réseau 140 sont implémentés dans un même dispositif 10 de sécurisation d'accès au réseau de communication 1, représenté sur la Fig. 5.

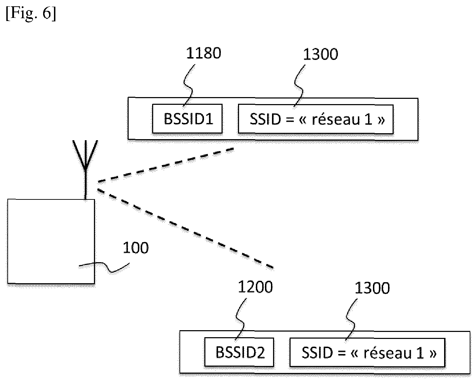

La Fig. 6 illustre une émission de deux trames d'information beacon depuis le dispositif de connexion sans fil 100. L'une des trames d'information beacon comprend, entres autres informations, l'identifiant BSSID1 1180 de sous-réseau, opérant comme identifiant de la zone de confiance 118 et le SSID commun 1300 qui contient une chaîne de caractères « réseau 1 ». La zone de confiance 118 est donc présentée à une station à portée du dispositif de connexion sans fil 100 grâce au SSID « réseau 1 » commun 1300. L'autre trame d'information beacon comprend, entre autres informations, l'identifiant BSSID2 1200 de sous-réseau, opérant comme identifiant de la zone de mise en quarantaine 120, et comprend également le SSID commun 1300 qui contient, pareillement à l'autre trame, la chaîne de caractères « réseau 1 ». La zone de mise en quarantaine 120 est donc astucieusement également présentée à une station à portée du dispositif de connexion sans fil 100 grâce au SSID « réseau 1 » commun. Avantageusement, et grâce à l'utilisation des identifiants 1180 et 1200 sous la forme d'identificateurs d'ensembles de services BSSID, il est possible de présenter les deux sous-réseaux 118 et 120, à une station à portée du dispositif de connexion sans fil 100, en utilisant un seul dispositif de connexion sans fil, y compris si ce dernier ne comprend qu'une seule interface de communication par ondes radioélectriques. Ainsi, une station qui souhaite se connecter au réseau de communication 1 identifié par le SSID commun « réseau 1 » 1300 trouvera la zone de confiance 118 ou la zone de mise en quarantaine 120, selon le paramètre 200 défini pour cette station par le contrôleur 114.

Dans le cas où deux dispositifs de connexion sans fil sont utilisés (100 et 150, par exemple), chacun peut être associé au sous-réseau correspondant par un BSSID, préférentiellement implémenté sous la forme d'une adresse MAC, ou encore son adresse MAC native de dispositif de connexion sans fil.

Le dispositif 10 peut en outre être configuré pour opérer des fonctions de passerelle réseau domestique, telles que celles classiquement implémentées par un dispositif « passerelle réseau » ou « gateway ». Selon cette configuration, le dispositif 10 est une passerelle réseau entre un réseau étendu et un réseau local et il est possible, grâce au procédé selon l'invention mis en œuvre dans le dispositif 10, d'isoler par exemple un réseau local privé (qui correspond alors à la zone de confiance 118), connecté à une interface 11800 du dispositif 10, d'un réseau étendu (soit le réseau étendu 160 connecté à une interface 16000 du dispositif 10). Une station connectée au dispositif 10 selon l'invention peut alors être isolée automatiquement du réseau local privé en cas de détection, par le contrôleur d'accès 114 du dispositif 10, d'un ou plusieurs accès susceptibles de laisser penser que cette station coopère avec un module logiciel de type malware ou de type virus informatique, ou encore que cette station est configurée ou utilisée pour opérer des accès de nature à compromettre la sécurité du réseau de communication 1.

Selon une variante, le réseau de communication 1 comprend, outre la zone de confiance 118 et la zone de mise en quarantaine 120, un troisième sous réseau 122 dédié à une connexion à distance prévue aux fins de réaliser des opérations de maintenance sur une station mobile détectée comme non conforme aux règles de sécurité définies pour le réseau de communication 1. Une connexion automatique à ce troisième sous-réseau est alors réalisée, le cas échéant, sous contrôle du contrôleur d'accès 114, en inscrivant simultanément l'adresse MAC de la station concernée dans la liste des adresses MAC interdites de connexion à la zone de confiance 118 et dans la liste des adresses MAC interdites de connexion à la zone de mise en quarantaine 120, sans toutefois l'inscrire dans une liste d'adresses MAC interdites d'accès à ce troisième sous-réseau 122 dédié à l'analyse et/ou la maintenance à distance d'une station détectée comme non conforme à la sécurité du réseau de communication. La méthode d'association automatique à ce réseau 122 est similaire aux méthodes de connexions automatiques à la zone de confiance 118 ou à la zone de mise en quarantaine 120 et se base sur un niveau de criticité préférentiellement défini à partir du paramètre 200 représentatif d'accès réalisés sur le réseau de communication 1. Selon un mode de réalisation, le troisième sous-réseau est un réseau VPN (du sigle anglais « Virtual Private Network » et qui signifie « réseau privé virtuel » implémenté dans la zone de mise en quarantaine et permettant, par exemple, une prise en charge d'une station jugée non conforme aux règles de sécurité, par une entreprise spécialisée, via le réseau étendu internet.

Avantageusement, le contrôleur d'accès 115 peut générer l'envoi de messages d'alerte automatiques, par courriel à un utilisateur ou un administrateur du réseau de communication 1, par exemple, ou encore par SMS à destination d'un ou plusieurs numéros de téléphone pré-enregistrés.

Avantageusement encore, le contrôleur d'accès 114 peut être configuré et/ou géré dynamiquement par un administrateur du réseau et par le biais de registres de configuration ou d'un langage de haut-niveau décrivant des règles de sécurité et/ou des types d'accès jugés délictueux au regard de la sécurité du réseau de communication 1.

Selon un mode de réalisation de l'invention, le paramètre 200 d'une station peut être déterminé pour tout ou partie en fonction de caractéristiques propres à la station, telles que, par exemple, le champ OUI (du sigle anglais « Organizationally Unique Identifier » et qui signifie « identifiant unique de l'organisation ») de son adresse MAC, ou encore selon des caractéristiques comme des options communiquées par la station à un serveur DHCP lors d'une attribution d'une adresse IP par le réseau de communication 1. Avantageusement, cela permet de fournir des informations sur le type de station au contrôleur d'accès 114 et/ou à un administrateur système du réseau de communication 1.

Selon un mode de réalisation de l'invention, un administrateur du réseau peut configurer le contrôleur d'accès 114 pour forcer la connexion d'une station connectée au réseau de communication 1 à la zone de confiance 118 ou à la zone de mise en quarantaine 120.

L'invention ne se limite pas aux seuls modes de réalisation décrits ci-avant, mais plus largement à tout procédé de sécurisation des accès à un réseau de communication, au moins un dispositif de connexion sans fil de type point d'accès audit réseau et un dispositif de routage de trames de données, le réseau comprenant un premier sous-réseau et un second sous-réseau, le dispositif de routage étant configuré pour qu'une station, connectée au réseau par association avec le dispositif de connexion sans fil grâce à un premier identifiant de réseau, puisse accéder à des dispositifs tiers connectés dans le premier sous-réseau, et pour qu'une station connectée au réseau par association avec le dispositif de connexion sans fil grâce à un second identifiant de réseau ne puisse pas accéder à des dispositifs tiers connectés dans le premier sous-réseau et puisse accéder à des dispositifs tiers connectés dans le second sous-réseau, le procédé étant caractérisé en ce qu'il comprend des étapes d'émettre par le dispositif de connexion sans fil, des trames d'information comprenant un identifiant de réseau SSID commun au premier sous-réseau et au second sous-réseau ; de recevoir, par le dispositif de connexion sans fil une requête en association émise par une station, la requête comprenant l'identifiant de réseau SSID commun au premier sous-réseau et au second sous-réseau ; de déterminer, par un contrôleur d'accès, un paramètre représentatif d'accès réalisés dans le réseau par la station émettrice de la requête en association ; et d'octroyer conditionnellement, par le contrôleur d'accès, à la station émettrice de la requête en association, une autorisation d'accéder, au premier sous-réseau, via le dispositif de connexion sans fil selon ledit paramètre, et en cas de refus d'accès au premier sous-réseau, d'octroyer, à ladite station, une autorisation d'accéder au second sous-réseau.

## Revendications

1. Procédé de sécurisation d'accès à un réseau de communication (1), exécuté par un dispositif (10) de sécurisation d'accès comprenant au moins un dispositif de connexion sans fil (100) de type point d'accès audit réseau (1) et un dispositif de routage de trames de données (110), ledit réseau (1) comprenant un premier sous-réseau (118) dit « zone de confiance » et un second sous-réseau (120) dit « zone de mise en quarantaine », le dispositif de routage (110) étant configuré pour qu'une station (103, 105, 107), connectée au réseau (1) par association avec le dispositif de connexion sans fil (100) grâce à un premier identifiant de sous-réseau (1180), puisse accéder à des dispositifs tiers connectés dans la zone de confiance, et pour qu'une station (103, 105, 107) connectée au réseau (1) par association avec le dispositif de connexion sans fil (100) grâce à un second identifiant de sous-réseau (1200) ne puisse pas accéder à des dispositifs tiers connectés dans la zone de confiance (118) et puisse accéder à des dispositifs tiers connectés dans la zone de mise en quarantaine (120), le procédé comprenant:
- émettre par le dispositif de connexion sans fil (100), des trames d'information (200) comprenant un identifiant de réseau SSID commun (1300) à la zone de confiance et à la zone de mise en quarantaine,
- recevoir, par le dispositif de connexion sans fil (100), une requête en association émise par une station (103, 105, 107), la requête comprenant l'identifiant de réseau SSID commun (1300) à la zone de confiance et à la zone de mise en quarantaine,
- déterminer, par un contrôleur d'accès (114) du dispositif (10) de sécurisation d'accès, un paramètre (200) représentatif d' accès réalisés dans ledit réseau (1) par la station (103, 105, 107) émettrice de la requête en association,
- octroyer conditionnellement, par le contrôleur d'accès (114) du dispositif (10) de sécurisation d'accès, à la station (103, 105, 107) émettrice de la requête en association, une autorisation d'accéder à la zone de confiance (118) via le dispositif de connexion sans fil (100) selon ledit paramètre (200), et en cas de refus d'accès à la zone de confiance (118), octroyer à ladite station (103, 105, 107) une autorisation d'accéder à la zone de mise en quarantaine (120),
le procédé étant **caractérisé en ce qu'**il comprend en outre :
- refuser une autorisation d'accès à la zone de confiance et accorder une autorisation d'accès à la zone de quarantaine à toute station qui se connecte pour la première fois au réseau de communication, et
- accorder une autorisation d'accès à la zone de confiance à la station et refuser une autorisation d'accès à la zone de quarantaine à la station lorsqu'aucun accès de ladite station au réseau de communication n'est identifié comme délictueux au regard de règles de sécurité définies pendant une durée prédéterminée à compter de la première connexion de ladite station au réseau de communication.

2. Procédé de sécurisation selon la revendication précédente, les premier (1180) et second (1200) identifiants de sous-réseau étant des identificateurs d'ensemble de services de base, préférentiellement implémentés sous la forme d'adresses MAC.

3. Procédé de sécurisation selon la revendication 1, le dispositif de connexion sans fil (100) étant un premier dispositif de connexion sans fil, le réseau (1) utilisant un second dispositif de connexion sans fil (150) de type point d'accès audit réseau (1), les premier (1180) et second (1200) identifiants de sous-réseau étant respectivement des identifiants du premier dispositif de connexion sans fil (100) et du second dispositif de connexion sans fil (150), préférentiellement des adresses MAC, et l'autorisation d'accéder à la zone de mise en quarantaine (120) étant conditionnée à des accès réalisés via le second point d'accès sans fil (150).

4. Procédé de sécurisation selon la revendication 2 ou 3, dans lequel le contrôleur d'accès (114) utilise une liste d'identifiants (1030, 1050, 1070) de stations (103, 105, 107) autorisées à opérer des accès à la zone de confiance (118) ou interdites d'accès à la zone de confiance (118), selon ledit paramètre (200).

5. Procédé selon l'une quelconque des revendications précédentes, comprenant :
- désassocier une station (103, 105, 107) du dispositif de connexion sans fil (100) selon la valeur dudit paramètre (200).

6. Procédé selon l'une quelconque des revendications précédentes, comprenant :
- en cas de refus d'accès à une station (103, 105, 107) à la zone de confiance (118), isoler cette station (103, 105, 107) en lui interdisant d'accéder à la zone de confiance (118) et à la zone de mise en quarantaine (120), et en l'autorisant à accéder à un troisième sous-réseau (122) identifiable par cette station (103, 105, 107) au moyen de l'identifiant de réseau SSID commun (1300).

7. Dispositif (10) de sécurisation d'accès à un réseau de communication (1) comprenant au moins un dispositif de connexion sans-fil (100) de type point d'accès audit réseau (1) et un dispositif de routage de trames de données (110), le dispositif (10) comprenant une première interface de connexion à un premier sous-réseau (118) dit « zone de confiance » dudit réseau (1), une seconde interface de connexion à un second sous-réseau (120) dit « zone de mise en quarantaine » dudit réseau (1), et un dispositif de routage (110) configuré pour qu'une station (103, 105, 107), connectée au réseau (1) par association avec le point d'accès (100) grâce à un premier identifiant de sous-réseau (1180), puisse accéder à des dispositifs tiers connectés dans la zone de confiance, et pour qu'une station (103, 105, 107) connectée au réseau (1) par association avec le dispositif de connexion sans fil (100) grâce à un second identifiant de sous-réseau (1200) ne puisse pas accéder à des dispositifs tiers connectés dans la zone de confiance (118) et puisse accéder à des dispositifs tiers connectés dans la zone de mise en quarantaine (120), le dispositif de sécurisation (10) étant **caractérisé en ce qu'**il comprend :
- un émetteur (1006) configuré pour émettre par le dispositif de connexion sans fil (100), des trames d'information comprenant un identifiant de réseau commun à la zone de confiance (118) et à la zone de mise en quarantaine (120),
- un récepteur (1006) configuré pour recevoir, par le dispositif de connexion sans fil (100) une requête en association émise par une station (103, 105, 107), la requête comprenant l'identifiant de réseau commun à la zone de confiance (118) et à la zone de mise en quarantaine (120),
- un contrôleur d'accès (114) configuré pour déterminer un paramètre (200) représentatif d'accès réalisés dans ledit réseau (1) par la station (103, 105, 107) émettrice de la requête en association et pour octroyer conditionnellement, à la station (103, 105, 107) émettrice de la requête en association, une autorisation d'accéder, à la zone de confiance (118), via le dispositif de connexion sans fil (100) selon ledit paramètre, et, en cas de refus d'accès à la zone de confiance (120), octroyer à cette station (103, 105, 107) une autorisation d'accéder à la zone de mise en quarantaine (120), le contrôleur d'accès étant en outre configuré pour refuser une autorisation d'accès à la zone de confiance et accorder une autorisation d'accès à la zone de quarantaine à toute station qui se connecte pour la première fois au réseau de communication, et pour accorder une autorisation d'accès à la zone de confiance à la station et refuser une autorisation d'accès à la zone de quarantaine à la station lorsqu'aucun accès de ladite station au réseau de communication n'est identifié comme délictueux au regard de règles de sécurité définies pendant une durée prédéterminée à compter de la première connexion de la station au réseau de communication.

8. Dispositif selon la revendication précédente, configuré pour implémenter une fonction de passerelle d'accès entre un réseau étendu (160) et un réseau local qui est ladite zone de confiance (118).

9. Produit programme d'ordinateur **caractérisé en ce qu'**il comprend des instructions de codes de programme pour exécuter les étapes du procédé selon la revendication 1, lorsque ledit programme est exécuté par un processeur.

10. Support de stockage d'informations comprenant un produit programme d'ordinateur selon la revendication précédente.

## Patentansprüche

1. Verfahren zur Sicherung des Zugriffs auf ein Kommunikationsnetz (1), das von einer Zugriffssicherungsvorrichtung (10) ausgeführt wird, die wenigstens eine Drahtlosverbindungsvorrichtung (100) vom Typ eines Zugangspunkts zu dem Netz (1) und eine Routing-Vorrichtung für Datenrahmen (110) umfasst, wobei das Netz (1) ein erstes Teilnetz (118), "vertrauenswürdige Zone" genannt, und ein zweites Teilnetz (120), "Quarantäneverbringungszone" genannt, umfasst, wobei die Routing-Vorrichtung (110) so konfiguriert ist, dass eine Station (103, 105, 107), die durch Assoziation mit der Drahtlosverbindungsvorrichtung (100) mithilfe einer ersten Teilnetzkennung (1180) mit dem Netz (1) verbunden ist, auf Drittvorrichtungen zugreifen kann, die in der vertrauenswürdigen Zone verbunden sind, und dass eine Station (103, 105, 107), die durch Assoziation mit der Drahtlosverbindungsvorrichtung (100) mithilfe einer zweiten Teilnetzkennung (1200) mit dem Netz (1) verbunden ist, nicht auf Drittvorrichtungen zugreifen kann, die in der vertrauenswürdigen Zone (118) verbunden sind, und auf Drittvorrichtungen zugreifen kann, die in der Quarantäneverbringungszone (120) verbunden sind, das Verfahren umfassend:
- Senden von Informationsrahmen (200), die eine gemeinsame Netzkennung SSID (1300) für die vertrauenswürdige Zone und die Quarantäneverbringungszone umfassen, durch die Drahtlosverbindungsvorrichtung (100),
- Empfangen einer Assoziationsanfrage, die von einer Station (103, 105, 107) gesendet wird, durch die Drahtlosverbindungsvorrichtung (100), wobei die Anfrage die gemeinsame Netzkennung SSID (1300) für die vertrauenswürdige Zone und die Quarantäneverbringungszone umfasst,
- Bestimmen, durch eine Zugriffssteuerung (114) der Zugriffssicherungsvorrichtung (10), eines Parameters (200), der für Zugriffe repräsentativ ist, die im Netz (1) von der Station (103, 105, 107) durchgeführt werden, die die Assoziationsanfrage sendet,
- durch die Zugriffssteuerung (114) der Zugriffssicherungsvorrichtung (10), der Station (103, 105, 107), die die Assoziationsanfrage sendet, bedingt eine Berechtigung zum Zugriff auf die vertrauenswürdige Zone (118) über die Drahtlosverbindungsvorrichtung (100) gemäß dem Parameter (200) erteilen, und bei Verweigerung von Zugriff auf die vertrauenswürdige Zone (118), der Station (103, 105, 107) eine Berechtigung zum Zugriff auf die Quarantäneverbringungszone (120) erteilen,
wobei das Verfahren **dadurch gekennzeichnet ist, dass** es ferner Folgendes umfasst:
- jeder Station, die sich zum ersten Mal mit dem Kommunikationsnetz verbindet, eine Zugriffsberechtigung für die vertrauenswürdige Zone verweigern und eine Zugriffsberechtigung für die Quarantänezone gewähren, und
- der Station eine Zugriffsberechtigung für die vertrauenswürdige Zone gewähren und der Station eine Zugriffsberechtigung für die Quarantänezone verweigern, wenn kein Zugriff der Station auf das Kommunikationsnetz als unerlaubt im Sinne festgelegter Sicherheitsregeln über eine vorbestimmte Dauer ab der ersten Verbindung der Station mit dem Kommunikationsnetz festgestellt wird.

2. Sicherungsverfahren nach dem vorhergehenden Anspruch, wobei die erste (1180) und zweite (1200) Teilnetzkennung Basisdienstsatzkennungen sind, die vorzugsweise in Form von MAC-Adressen implementiert sind.

3. Sicherungsverfahren nach Anspruch 1, wobei die Drahtlosverbindungsvorrichtung (100) eine erste Drahtlosverbindungsvorrichtung ist, wobei das Netz (1) eine zweite Drahtlosverbindungsvorrichtung (150) vom Typ eines Zugangspunkts zu dem Netz (1) verwendet, wobei die erste (1180) und zweite (1200) Teilnetzkennung Kennungen der ersten Drahtlosverbindungsvorrichtung (100) beziehungsweise der zweiten Drahtlosverbindungsvorrichtung (150) sind, vorzugsweise MAC-Adressen, und die Berechtigung zum Zugriff auf die Quarantäneverbringungszone (120) von Zugriffen bedingt ist, die über den zweiten Drahtloszugangspunkt (150) durchgeführt werden.

4. Sicherungsverfahren nach Anspruch 2 oder 3, wobei die Zugriffssteuerung (114) eine Liste mit Kennungen (1030, 1050, 1070) von Stationen (103, 105, 107) verwendet, die berechtigt sind, Zugriffe auf die vertrauenswürdige Zone (118) vorzunehmen, oder denen Zugriff auf die vertrauenswürdige Zone (118) verwehrt ist, gemäß dem Parameter (200).

5. Verfahren nach einem der vorhergehenden Ansprüche, umfassend:
- Dissoziieren einer Station (103, 105, 107) von der Drahtlosverbindungsvorrichtung (100) gemäß dem Wert des Parameters (200).

6. Verfahren nach einem der vorhergehenden Ansprüche, umfassend:
- Bei Verweigerung von Zugriff einer Station (103, 105, 107) auf die vertrauenswürdige Zone (118), Isolieren dieser Station (103, 105, 107), indem ihr der Zugriff auf die vertrauenswürdige Zone (118) und die Quarantäneverbringungszone (120) verwehrt wird und ihr der Zugriff auf ein drittes Teilnetz (122) gestattet wird, das von dieser Station (103, 105, 107) mittels der gemeinsamen Netzkennung SSID (1300) ermittelt werden kann.

7. Vorrichtung (10) zur Sicherung des Zugriffs auf ein Kommunikationsnetz (1), die wenigstens eine Drahtlosverbindungsvorrichtung (100) vom Typ eines Zugangspunkts zu dem Netz (1) und eine Routing-Vorrichtung für Datenrahmen (110) umfasst, wobei die Vorrichtung (10) eine erste Schnittstelle zur Verbindung mit einem ersten Teilnetz (118), genannt "vertrauenswürdige Zone", des Netzes (1), eine zweite Schnittstelle zur Verbindung mit einem zweiten Teilnetz (120), genannt "Quarantäneverbringungszone", des Netzes (1) und eine Routing-Vorrichtung (110) umfasst, die so konfiguriert ist, dass eine Station (103, 105, 107), die durch Assoziation mit der Zugangspunkt (100) mithilfe einer ersten Teilnetzkennung (1180) mit dem Netz (1) verbunden ist, auf Drittvorrichtungen zugreifen kann, die in der vertrauenswürdigen Zone verbunden sind, und dass eine Station (103, 105, 107), die durch Assoziation mit der Drahtlosverbindungsvorrichtung (100) mithilfe einer zweiten Teilnetzkennung (1200) mit dem Netz (1) verbunden ist, nicht auf Drittvorrichtungen zugreifen kann, die in der vertrauenswürdigen Zone (118) verbunden sind, und auf Drittvorrichtungen zugreifen kann, die in der Quarantäneverbringungszone (120) verbunden sind, wobei die Sicherungsvorrichtung (10) **dadurch gekennzeichnet ist, dass** sie Folgendes umfasst:
- einen Sender (1006), der dafür konfiguriert ist, durch die Drahtlosverbindungsvorrichtung (100) Informationsrahmen zu senden, die eine gemeinsame Netzkennung für die vertrauenswürdige Zone (118) und die Quarantäneverbringungszone (120) umfassen,
- einen Empfänger (1006), der dafür konfiguriert ist, durch die Drahtlosverbindungsvorrichtung (100) eine Assoziationsanfrage zu empfangen, die von einer Station (103, 105, 107) gesendet wird, wobei die Anfrage die gemeinsame Netzkennung für die vertrauenswürdige Zone (118) und die Quarantäneverbringungszone (120) umfasst,
- eine Zugriffssteuerung (114), die dafür konfiguriert ist, einen Parameter (200) zu bestimmen, der für Zugriffe repräsentativ ist, die im Netz (1) von der Station (103, 105, 107) durchgeführt werden, die die Assoziationsanfrage sendet, und der Station (103, 105, 107), die die Assoziationsanfrage sendet, bedingt eine Berechtigung zum Zugriff auf die vertrauenswürdige Zone (118) über die Drahtlosverbindungsvorrichtung (100) gemäß dem Parameter zu erteilen, und bei Verweigerung von Zugriff auf die vertrauenswürdige Zone (120) dieser Station (103, 105, 107) eine Berechtigung zum Zugriff auf die Quarantäneverbringungszone (120) zu erteilen, wobei die Zugriffssteuerung ferner dafür konfiguriert ist, jeder Station, die sich zum ersten Mal mit dem Kommunikationsnetz verbindet, eine Zugriffsberechtigung für die vertrauenswürdige Zone zu verweigern und eine Zugriffsberechtigung für die Quarantänezone zu gewähren und der Station eine Zugriffsberechtigung für die vertrauenswürdige Zone zu gewähren und der Station eine Zugriffsberechtigung für die Quarantänezone zu verweigern, wenn kein Zugriff der Station auf das Kommunikationsnetz als unerlaubt im Sinne festgelegter Sicherheitsregeln über eine vorbestimmte Dauer ab der ersten Verbindung der Station mit dem Kommunikationsnetz festgestellt wird.

8. Vorrichtung nach dem vorhergehenden Anspruch, die dafür konfiguriert ist, eine Access-Gateway-Funktion zwischen einem Weitverkehrsnetz (160) und einem lokalen Netz, das die vertrauenswürdige Zone (118) ist, zu implementieren.

9. Computerprogrammprodukt, **dadurch gekennzeichnet, dass** es Programmcode-Anweisungen umfasst, um die Schritte des Verfahrens nach Anspruch 1 auszuführen, wenn das Programm von einem Prozessor ausgeführt wird.

10. Informationsspeichermedium umfassend ein Computerprogrammprodukt nach dem vorhergehenden Anspruch.

## Claims

1. Method for protecting accesses to a communication network (1), executed by an access-protection device comprising at least one wireless connection device (100) of the type consisting of an access point to said network (1) and a data-frame routing device (110), said network (1) comprising a first sub-network (118) referred to as a "trusted zone" and a second sub-network (120) referred to as a "quarantine zone", the routing device (110) being configured so that a station (103, 105, 107) connected to the network (1) by association with the wireless connection device (100) by means of a first sub-network identifier (1180) can access third-party devices connected in the trusted zone, and so that a station (103, 105, 107) connected to the network (1) by association with the wireless connection device (100) by means of a second sub-network identifier (1200) cannot access third-party devices connected in the trusted zone (118) and can access third-party devices connected in the quarantine zone (120), the method comprising:
- sending, by the wireless connection device (100), information frames (200) comprising an SSID network identifier (1300) common to the trusted zone and to the quarantine zone,
- receiving, by the wireless connection device (100), a join request sent by a station (103, 105, 107), the request comprising the SSID network identifier (1300) common to the trusted zone and to the quarantine zone,
- determining, by an access controller (114) of the access-protection device (10), a parameter (200) representing accesses made in said network (1) by the station (103, 105. 107) sending the join request,
- conditionally granting, by the access controller (114) of the access-protection device (10), to the station (103, 105. 107) sending the join request, an authorisation to access the trusted zone (118) via the wireless connection device (100) according to said parameter (200), and, in the case of refusal of access to the trusted zone (118), granting, to said station (103, 105. 107), authorisation to access the quarantine zone (120),
the method being **characterised in that** it furthermore comprises:
- refusing authorisation to access the trusted zone and granting authorisation to access the quarantine zone to any station that connects the first time to the communication network, and
- granting authorisation to access the trusted zone to the station and refusing authorisation to access the quarantine zone to the station when no access of said station to the communication network is identified as wrongful with regard to security rules defined during a predetermined period as from the first connection of said station to the communication network.

2. Protection method according to the preceding claim, the first (1180) and second (1200) sub-network identifiers being identifiers of a basic set of services, preferentially implemented in the form of MAC addresses.

3. Protection method according to claim 1, the wireless connection device (100) being a first wireless connection device, the network (1) using a second wireless connection device (150) of the type consisting of a point of access to said network (1), the first (1180) and second (1200) sub-network identifiers being respectively identifiers of the first wireless connection device (100) and of the second wireless connection device (150), preferentially MAC addresses, and the authorisation to access the quarantine zone (120) being dependent on accesses made via the second wireless access point (150).

4. Protection method according to claim 2 or 3, wherein the access controller (114) uses a list of identifiers (1030, 1050, 1070) of stations (103, 105, 107) authorised to access the trusted zone (118) or forbidden to access the trusted zone (118), according to said parameter (200).

5. Method according to any one of the preceding claims, comprising:
- disassociating a station (103, 105, 107) from the wireless connection device (100) according to the value of said parameter (200).

6. Method according to any one of the preceding claims, comprising:
- in the case of refusal of access to a station (103, 105, 107) to the trusted zone (118), isolating this station (103, 105, 107) by forbidding it to access the trusted zone (118) and the quarantine zone (120), and authorising it to access a third sub-network (122) identifiable by this station (103, 105, 107) by means of the common SSID network identifier (1300).

7. Device (10) for protecting access to a communication network (1) comprising at least one wireless connection device (100) of the type consisting of a point of access to said network (1) and a data-frame routing device (110), the device (10) comprising a first interface for connection to a first sub-network (118) referred to as a "trusted zone" of said network (1), a second interface for connection to a second sub-network (120) referred to as a "quarantine zone" of said network (1), and a routing device (110) configured so that a station (103, 105. 107) connected to the network (1) by association with the access point (100) by means of a first sub-network identifier (1180) can access third-party devices connected in the trusted zone, and so that a station (103, 105. 107) connected to the network (1) by association with the wireless connection device (100) by means of a second sub-network identifier (1200) cannot access third-party devices connected in the trusted zone (118) and can access third-party devices connected in the quarantine zone (120), the protection device (10) being **characterised in that** it comprises:
- a transmitter (1006) configured for sending, by the wireless connection device (100), information frames comprising a network identifier common to the trusted zone (118) and to the quarantine zone (120),
- a receiver (1006) configured for receiving, by the wireless connection device (100), a join request sent by a station (103, 105. 107), the request comprising the network identifier common to the trusted zone (118) and to the quarantine zone (120),
- an access controller (114) configured for determining a parameter (200) representing accesses made in said network (1) by the station (103, 105. 107) sending the join request, and for conditionally granting, to the station (103, 105. 107) sending the join request, an authorisation to access, to the trusted zone (118), via the wireless connection device (100) according to said parameter, and, in the case of refusal of access to the trusted zone (120), granting to this station (103, 105. 107) authorisation to access the quarantine zone (120), the access controller being furthermore configured to refuse authorisation to access the trusted zone and to grant authorisation to access the quarantine zone to any station that connects the first time to the communication network, and to grant authorisation to access the trusted zone to the station and to refuse authorisation to access the quarantine zone to the station when no access of said station to the communication network is identified as wrongful with regard to security rules defined during a predetermined period as from the first connection of said station to the communication network.

8. Device according to the preceding claim, configured to implement a function of gateway for access between a wide-area network (160) and a local network consisting of said trusted zone (118).

9. Computer program product, **characterised in that** it comprises program code instructions for executing the steps of the method according to claim 1, when said program is executed by a processor.

10. Information storage medium, comprising a computer program product according to the preceding claim.
